# FASCICULE DE BREVET EUROPEEN

(11) **EP 0 599 734 B1**
(45) Date de publication et mention de la délivrance du brevet: **23.09.1998**
(21) Numéro de dépôt: 93402852.3
(22) Date de dépôt: 24.11.1993
(51) Int. Cl.: H04Q 3/68

(54) **Réseau de commutateurs**
Schalternetzwerk
Switch network

(30) Priorité: 27.11.1992 FR 9214313
(43) Date de publication de la demande: 01.06.1994
(73) Titulaire: ALCATEL ALSTHOM COMPAGNIE GENERALE D'ELECTRICITE, 75008 Paris (FR)
(72) Inventeur: Vaillant, Bruno, F-31400 Toulouse (FR)
(74) Mandataire: Pothet, Jean Rémy Emile Ludovic

(56) Documents cités:
- FR-A- 2 589 632
- IEEE TRANSACTIONS ON COMPUTERS vol. C-30, no. 2 , Février 1981 , NEW YORK US pages 164 - 168 J. GESCEI ET AL. 'THE TOPOLGY OF CELLULAR PARTITIONING NETWORKS'
- IEEE TRANSACTIONS ON RELIABILITY vol. 39, no. 3 , Aoüt 1990 , NEW YORK US pages 301 - 308 J. FRIED ET AL. 'RELIABILITY MODELS FOR FACILITIES SWITCHING'

## Description

La présente invention concerne un réseau de commutateurs comportant N accès d'entrée et T accès de sortie, apte à connecter mutuellement et individuellement P (P ≤ N et P ≤ T) entrées quelconques, parmi N, et P sorties quelconques, parmi T.

En agissant sur la position des commutateurs on peut modifier le choix des P entrées ou des P sorties.

Ce réarrangement doit se faire en apportant le minimum de perturbations, c'est-à-dire en ne causant que le plus petit nombre possible de modifications des connexions existantes, tout en faisant en sorte que les connexions établies traversent le moins de commutateurs possible.

Bien entendu, les termes entrées et sorties tels qu'on vient de les employer sont interchangeables du point de vue du réseau de commutateurs, ce qui se permet de se limiter à l'étude du cas T>N.

De tels réseaux sont implantés dans les satellites de télécommunications pour établir P canaux de communications simultanés à choisir par l'exploitant entre N possibles et les connecter individuellement à P parmi T équipements d'un même type.

Ils permettent par exemple de faire face à des défaillances de ces équipements (T - P au maximum). On utilise en général deux réseaux symétriques de part et d'autres des équipements, dont les commutateurs sont commandés simultanément.

Cette disposition permet de connecter chacune des P entrées (parmi N) à l'un des P (parmi T) équipements, puis cet équipement par le réseau symétrique à une entrée parmi T de ce dernier qui mènera à une sortie ayant la même position que l'entrée du premier réseau.

Les commutateurs utilisés dans ces réseaux ont quatre pôles et permettent de connecter un premier pôle à un deuxième, un troisième ou un quatrième et, en correspondance, de connecter ledit troisième pôle auxdits quatrième, premier ou deuxième pôles. L'affectation des numéros de pôle étant quelconque, plus précisément, on connaît:
- un commutateur à trois positions permettant de connecter soit un premier pôle à un deuxième et un troisième à un quatrième, soit un premier pôle à un troisième et un deuxième à un quatrième, soit un premier à un quatrième et un deuxième à un troisième.
- un commutateur à quatre positions permettant de connecter soit un premier pôle à un deuxième et un troisième à un quatrième, soit un premier à un troisième, soit un premier à un quatrième et un deuxième à un troisième, soit enfin dans la dernière position un deuxième à un quatrième.

Les structures de réseau les plus connues sont de deux types, soit linéaires ou en chaîne, soit en anneaux.

La structure linéaire ou en chaîne est utilisée lorsque N = P et que T vaut P + 1 ou P + 2. Chaque commutateur est relié à ses deux voisins sauf les deux commutateurs d'extrémité reliés au reste du réseau par un seul pôle. Les autres pôles disponibles des commutateurs intermédiaires sont affectés respectivement à une entrée et à une sortie. Les trois pôles disponibles des deux commutateurs d'extrémité sont reliés l'un à une entrée et les deux autres soit à une seule sortie, un pôle restant libre, soit à deux sorties.

La structure en anneau, utilisée dans les autres cas, est constituée d'une boucle principale sur laquelle on trouve tous les commutateurs reliés l'un à l'autre par deux de leurs pôles, chacun des deux autres pôles étant connecté soit à une entrée, soit à une sortie, soit à un autre commutateur de l'anneau par une liaison directe.

Ces structures sont limitées à bien des égards. Elles nécessitent un nombre élevé de commutateurs pour satisfaire la fonction, les réarrangements causent la plupart du temps des modifications extensives des connexions établies et le nombre de commutateurs traversés par le signal peut alors être important.

Le document FR 2 589 632 concerne des réseaux de commutateurs de structure dérivée de la boucle, comprenant deux sections interconnectées par des commutateurs nodaux. Leur efficacité n'est pas optimale non plus, du fait de l'emploi généralisé de liaisons directes entre commutateurs nodaux.

La présente invention a pour objet un réseau conforme au préambule de la revendication 1, ayant les fonctions définies plus haut et utilisant les mêmes types de commutateurs à quatre pôles, qui ne souffre pas des inconvénients des réseaux connus.

Ce réseau comprend une pluralité de commutateurs nodaux, chacun desdits commutateurs nodaux étant connecté à l'un au moins des autres commutateurs nodaux par au moins un chemin, ainsi qu'une pluralité de cordes, une corde étant une chaîne comprenant un commutateur de corde au moins, chaque commutateur de corde donnant accès à une entrée ou une sortie au moins et étant connecté à deux autres commutateurs au plus, chaque corde étant en outre connectée à deux commutateurs nodaux, entre deux commutateurs nodaux, il est prévu plusieurs chemins distincts, l'un d'entre eux au moins comportant au moins une corde.

Il se caractérise en ce que lesdits différents chemins distincts comprennent tous au moins une corde.

Ainsi, d'une manière générale, le réseau comprend des commutateurs nodaux reliés entre eux par des cordes.

On aura aussi, pour un commutateur nodal, au moins trois cordes qui lui seront connectées.

En outre, le réseau de commutateurs de l'invention peut comprendre au moins une branches, comprenant un commutateur dont un pôle au plus est raccordé à un accès d'entrée, deux pôles sont disponibles pour le raccordement d'accès de sortie et un pôle enfin est connecté à un pôle d'un commutateur d'un point nodal.

Des réseaux plus complexes reprenant et combinant les structures décrites ci-dessus entrent évidemment dans le champ de la présente invention.

Les différents objets et caractéristiques de l'invention apparaîtront plus clairement à la lumière de la description qui va suivre d'exemples de réalisation de l'invention, faite en se référant aux figures annexées qui représentent:
- les figures 1a à 1e différentes représentations d'un commutateur à quatre positions utilisable dans le réseau de la présente invention.
- les figures 2a à 2e des exemples de cordes employées dans le réseau de la présente invention,
- les figures 3a et 3b, des exemples de branches employées dans le réseau de la présente invention,
- les figures 4a, 4b, 4c, des exemples de commutateurs nodaux,
- les figures 5, et 6, deux exemples de réseaux de commutateurs suivant l'invention.

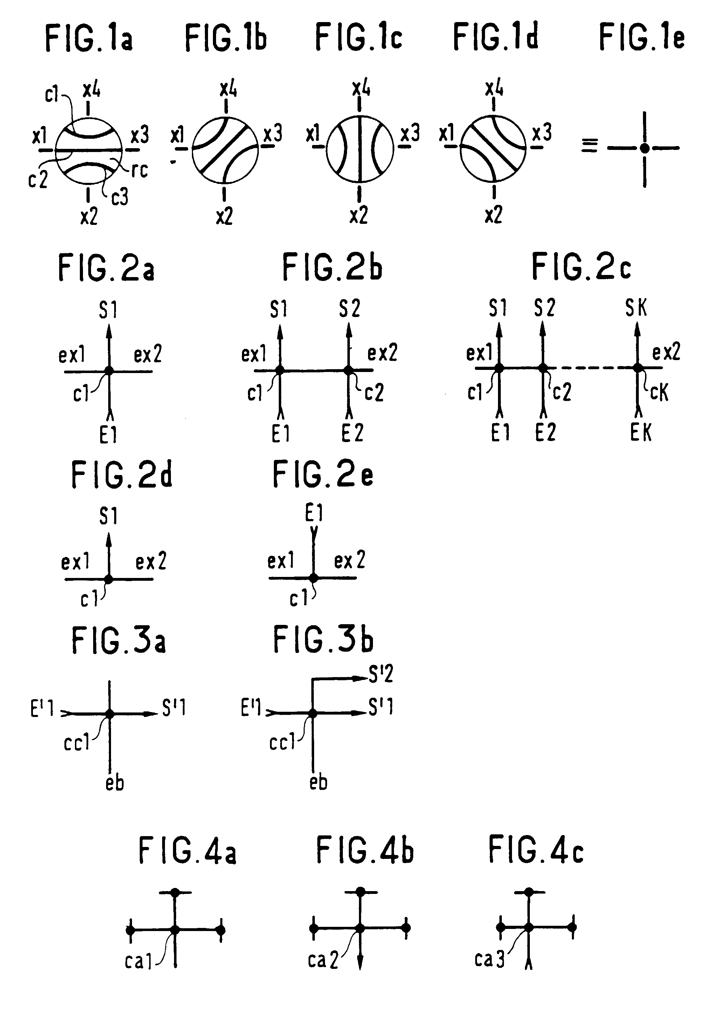

Le commutateur des figures la à le comprend 4 pôles x1, x2, x3, x4 connectés entre eux, selon sa position, par une pièce rotative rc pourvue de voies de connexion vc1, vc2, vc3. A la figure 1a, il établit la connexion x1-x3. A la figure 1b, il établit les connexions x1-x4 et x2-x3. A la figure 1c, il établit la connexion x4-x2 et, à la figure 1d, il établit les connexions x1-x2 et x4-x3.

La figure le représente un symbole commode pour figurer ce commutateur dans les dessins suivants.

Une variante non représentée, de ce commutateur, à 3 positions seulement, établit en même temps les connexions des figures 1a et 1c.

Dans la description de l'invention, on appelle :
commutateur nodal: un commutateur dont trois pôles au moins sont connectés à trois autres commutateurs;
- commutateur de corde : un commutateur dont deux pôles sont connectés à deux autres commutateurs et deux autres pôles sont disponibles pour donner accès à une entrée ou une sortie au moins ;
- liaison directe : la connexion sans commutateur de corde entre deux commutateurs nodaux ;
- corde : une chaîne entre deux commutateurs nodaux ; comprenant un commutateur de corde au moins ;
- branche : un ensemble comprenant au moins un commutateur, connecté au reste du réseau par une seule liaison.

Les figures 2a à 2e représentent différentes variantes d'une corde employée dans le réseau de la présente invention, c'est-à-dire un agencement comprenant un, deux, ou plusieurs commutateurs de corde C1, C2, Ck conformes à la figure le, disposés en chaîne entre deux extrémités de corde ex1 et ex2, avec un pôle de C1 connecté à l'extrémité ex1, un autre connecté à un pôle de C2, un autre pôle de C2 connecté à un pôle de C3..., jusqu'au dernier commutateur de la chaîne, Ck, dont un pôle est connecté à l'extrémité ex2. Les autres pôles des commutateurs de la corde sont connectés à des entrées E1, E2..., qui sont figurées chacune par une flèche en direction du commutateur, des sorties S1, S2..., qui sont figurées chacune par une flèche dans la direction opposée au commutateur, ou sont libres.

Les figures 3a et 3b représentent des exemples de branches employées dans le réseau de la présente invention. De manière générale, il s'agit d'un sous-ensemble du réseau ayant une seule liaison avec lui. En pratique, une branche comprend un commutateur de branche CC1 dont un pôle est connecté à une entrée E'1, un autre à une extrémité de branche eb, les deux derniers pôles à deux sorties S'1 et S'2 (fig. 3b) ou à une seule, le pôle restant étant libre (fig. 3a).

Les figures 4a, 4b et 4c représentent différents types de commutateurs nodaux, un commutateur nodal étant un commutateur dont trois pôles au moins sont connectés à trois autres commutateurs : à la figure 4a, le commutateur nodal cal est connecté à trois autres commutateurs, son quatrième pôle étant libre ; à la figure 4b, le commutateur nodal est connecté à trois autres commutateurs et à une sortie ; à la figure 4c, le commutateur nodal est connecté à trois autres commutateurs et à une entrée.

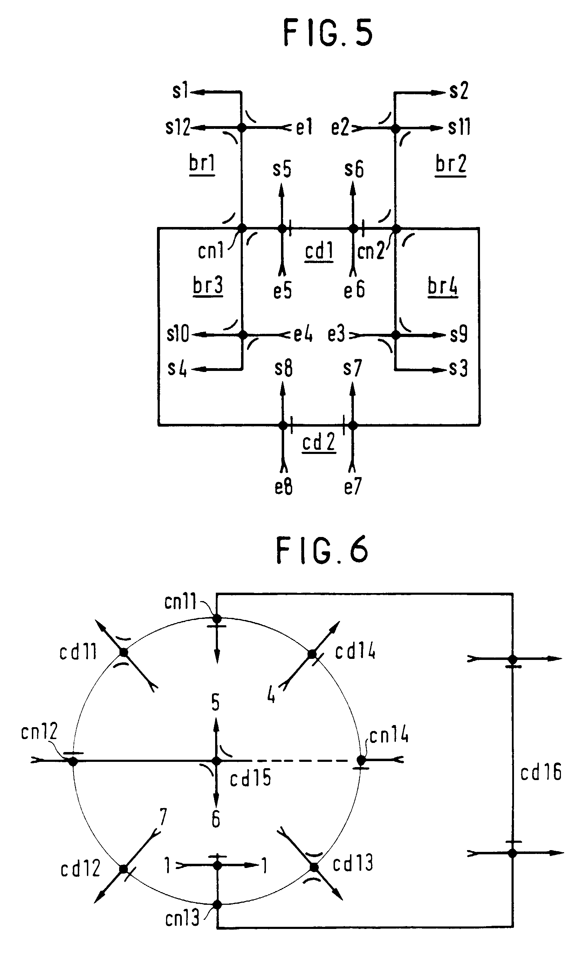

La figure 5 représente un premier exemple de réseau de commutateurs conforme à la présente invention. Ce réseau à 8 accès d'entrée e1 à e8, 12 accès de sortie s1 à s12, deux commutateurs nodaux cn1, cn2, deux cordes cd1, cd2, et quatre branches br1, br2, br3 et br4.

On notera que l'on a bien dans ce réseau trois branches au moins, br1, br2, br3, par exemple.

Au voisinage des commutateurs, des arcs ou un trait droit indiquent les connexions initialement établies: c1-s1, c2-s2, a3-s3, e4-s4, e5-s5, e6-s6, e7-s7, e8-s8. Les sorties s9 à s12 sont disponibles et connectées aux commutateurs nodaux. Chacune peut donc venir, en cas de besoin suppléer une sortie défaillante dans une branche, moyennant une seule opération de commutation.

Des variantes du réseau de la figure 5, que l'on ne représentera pas, auront des cordes selon les figures 2a, 2c, 2d ou 2e, des branches absentes, ou réduites à une sortie ou une entrée, ou conformes à la figure 3a.

D'autres, telles que celle de la figure 6, auront plus de deux commutateurs nodaux (cn11 à cn14), plus de deux cordes (cd11 à cd16), éventuellement aucune branche.

On remarquera que l'on a bien deux commutateurs nodaux, cn11 et cn13 par exemple, qui sont reliés entre eux par trois chemins distincts (corde cd16 ; cordes cd14 et cd13 ; cordes cd11 et cd12).

La structure du réseau objet de la présente invention permet de remplir la fonction décrite avec un nombre réduit de commutateurs. On obtient sur les P trajets un minimum de commutateurs traversés. En choisissant judicieusement la position initiale de ceux-ci on aura un minimum de perturbations lors d'un réarrangement.

## Revendications

1. Réseau de commutateurs comportant N accès d'entrée et T accès de sortie, apte à connecter mutuellement et individuellement P (P ≤ N et P ≤ T) entrées quelconques et P sorties quelconques, les commutateurs ayant quatre pôles et permettant de connecter un premier pôle à un deuxième, un troisième ou un quatrième pôle et, en correspondance, de connecter ledit troisième pôle auxdits quatrième, premier ou deuxième pôle, la structure de ce réseau comprenant une pluralité de commutateurs nodaux, (cn1, cn2; cn11-14) un commutateur nodal étant un commutateur dont trois pôles au moins sont connectés à trois autres commutateurs, chacun desdits commutateurs nodaux étant connecté à l'un au moins des autres commutateurs nodaux par au moins un chemin, ainsi qu'une pluralité de cordes, (cd1, cd2; cd11-14), une corde étant une chaîne comprenant un commutateur de corde au moins, chaque commutateur de corde donnant accès à une entrée ou une sortie au moins et étant connecté à deux autres commutateurs au plus, chaque corde étant en outre connectée à deux commutateurs nodaux, et, entre deux commutateurs nodaux, plusieurs chemins distincts étant prévus, l'un d'entre eux au moins comportant au moins une corde, caractérisé en ce que lesdits différents chemins distincts comprennent tous au moins une corde.

2. Réseau de commutateurs conforme à la revendication 1, caractérisé en ce que trois chemins au moins sont connectés à chaque commutateur nodal.

3. Réseau de commutateurs conforme à la revendication 1 ou 2, caractérisé en ce qu'il comprend une branche au moins (br1 à br4), qui est un agencement comprenant un commutateur, dont un pôle est connecté à un accès d'entrée, deux pôles sont disponibles pour le raccordement de deux accès de sortie au plus et un pôle enfin est connecté à un pôle d'un commutateur nodal.

4. Réseau de commutateurs conforme à la revendication 3 comprenant trois branches au moins.

5. Réseau de commutateurs conforme aux revendications 1 et 3 caractérisé en ce qu'il comprend deux commutateurs nodaux au moins reliés entre eux par une corde au moins et auxquels sont connectées des branches.

## Patentansprüche

1. Schalternetzwerk mit N Eingängen und T Ausgängen, das in der Lage ist, P (P ≤ N und P ≤ T) beliebige Eingänge und P beliebige Ausgänge miteinander einzeln zu verbinden, wobei die Schalter vier Pole haben und es gestatten, einen ersten Pol mit einem zweiten, einem dritten oder einem vierten Pol zu verbinden und entsprechend den dritten Pol mit dem vierten, ersten oder zweiten Pol zu verbinden, wobei die Struktur dieses Netzwerks eine Mehrzahl von Knoten-Schaltern (cn1, cn2; cn11-14), wobei ein Knoten-Schalter ein Schalter ist, von dem wenigstens drei Pole an drei andere Schalter angeschlossen sind, wobei jeder der Knoten-Schalter mit wenigstens einem der anderen Knoten-Schalter über wenigstens einen Weg verbunden ist, sowie eine Mehrzahl von Saiten (cd1, cd2; cd11-14) umfaßt, wobei eine Saite eine Kette ist, die wenigstens einen Saiten-Schalter umfaßt, wobei jeder Saiten-Schalter Zugang zu wenigstens einem Eingang oder einem Ausgang gibt und an höchstens zwei andere Schalter angeschlossen ist, jede Saite ferner an zwei Knoten-Schalter angeschlossen ist, und zwischen zwei Knoten-Schaltern mehrere verschiedene Wege vorgesehen sind, unter denen wenigstens einer wenigstens eine Saite umfaßt, dadurch gekennzeichnet, daß die unterschiedlichen verschiedenen Wege alle wenigstens eine Saite umfassen.

2. Schalternetzwerk nach Anspruch 1, dadurch gekennzeichnet, daß wenigstens drei Wege an jeden Knoten-Schalter angeschlossen sind.

3. Schalternetzwerk nach Anspruch 1 oder 2, dadurch gekennzeichnet, daß es wenigstens einen Zweig (br1 bis br4) umfaßt, der eine Anordnung mit einem Schalter ist, von dem ein Pol an einen Eingang angeschlossen ist, zwei Pole zum Anschließen von höchstens zwei Ausgängen zur Verfügung stehen und ein Pol an einen Knoten-Schalter angeschlossen ist.

4. Schalternetzwerk nach Anspruch 3, mit wenigstens drei Zweigen.

5. Schalternetzwerk nach Ansprüchen 1 und 3, dadurch gekennzeichnet, daß es wenigstens zwei miteinander durch wenigstens eine Saite verbundene Knoten-Schalter umfaßt, wobei an die Knoten-Schalter Zweige angeschlossen sind.

## Claims

1. Network of switches comprising N input ports and T output ports adapted to connect mutually and individually any P inputs and any P outputs (P ≤ N and P ≤ T), the switches having four poles and enabling a first pole to be connected to a second, a third or a fourth pole and, correspondingly, said third pole to be connected to said fourth, first or second pole, the structure of said network comprising a plurality of nodal switches (cn1, cn2; cn11-14), a nodal switch being a switch of which at least three poles are connected to three other switches, each of said nodal switches being connected to at least one of the other nodal switches by at least one path, and a plurality of cords (cd1, cd2; cd11-14), a cord being a chain comprising at least one cord switch, each cord switch providing access to at least one input or output and being connected to two other switches at most, each cord being further connected to two nodal switches, and, a plurality of separate paths being provided between two nodal switches, at least one of them comprising at least one cord, characterised in that said various separate paths all comprise at least one cord.

2. Network of switches according to claim 1 characterised in that at least three paths are connected to each nodal switch.

3. Network of switches according to claim 1 or claim 2 characterised in that it comprises at least one branch (brl to br4), which is an arrangement comprising a switch, one pole of which is connected to an input port, two poles are available for the connection of two output ports at most and one pole is connected to a pole of a nodal switch.

4. Network of switches according to claim 3 comprising at least three branches.

5. Network of switches according to claim 1 and claim 3 characterised in that it comprises at least two nodal switches interconnected by at least one cord and to which branches are connected.
